# NEUE EUROPÄISCHE PATENTSCHRIFT

(11) **EP 1 666 295 B2**
(45) Veröffentlichungstag und Bekanntmachung des Hinweises auf die Entscheidung über den Einspruch: **14.03.2018**
(45) Hinweis auf die Patenterteilung: 10.03.2010
(21) Anmeldenummer: 05025897.9
(22) Anmeldetag: 28.11.2005
(51) Int. Cl.: B60J 10/00, F16J 15/12

(54) **Metallband als Einlage für Zier- oder Dichtstreifen**
Metallic insert band for trimming and sealing strips
Lame métallique d'insertion pour bandes décorative et d'étanchéité

(30) Priorität: 06.12.2004 DE 102004058735
(43) Veröffentlichungstag der Anmeldung: 07.06.2006
(73) Patentinhaber: BFC Fahrzeugteile GmbH, 74321 Bietigheim-Bissingen (DE)
(72) Erfinder: Neth, Walter, 70839 Gerlingen (DE)
(74) Vertreter: Manitz Finsterwald Patentanwälte PartmbB

(56) Entgegenhaltungen:
- EP-A- 0 473 123
- EP-A1- 0 884 209
- EP-A2- 1 464 526
- DE-C1- 10 124 484
- DE-U1- 8 619 573
- FR-A1- 2 509 825
- FR-A1- 2 509 825
- FR-A1- 2 852 074
- US-A- 2 290 842
- US-A- 2 290 842

## Beschreibung

Die vorliegende Erfindung betrifft ein Metallband als Einlage für Zier- oder Dichtstreifen aus flexiblem Material, insbesondere Gummi oder Kunststoff, welches insbesondere zu einem Profil gebogen wird, mit einer Vielzahl von insbesondere periodisch in Längsrichtung des Bandes aufeinanderfolgenden, von einem Rand des Metallbandes quer zu seiner Längsrichtung nach innen geführten, keilförmigen oder innen keilförmig auslaufenden Schlitzen und in Längsrichtung zwischen aufeinanderfolgenden Randschlitzen angeordneten, ebenfalls quer zur Längsrichtung des Metallbandes verlaufenden, aber nicht bis zum Rand geführten Mittelschlitzen, die zu ihren beiden Enden hin in einer Spitze auslaufen.

Derartige Metallbänder werden insbesondere im Kraftfahrzeugbereich als Einlage für Dichtstreifen zum Abdichten von Motorraum-, Kofferraum- und Türöffnungen eingesetzt. Ein derartiges Metallband ist aus der EP 0 884 209 A bekannt. Die kontinuierlich gefertigten Metallbänder sind mit Gummi und/oder flexiblem Kunststoff ummantelt und weisen Schlitze auf, unter anderem, um bei nicht haftmittelbeschichteten Metallbändern ein Durchdringen des Dichtmaterials zu ermöglichen, da die Haftung Gummi-Metall bzw. Kunststoff-Metall nicht möglich ist. Andererseits sind haftmittelbeschichtete Metallbänder sehr teuer. Vorteilhaft - hergestellt werden können die Metallbänder durch rotatives Schneiden der Schlitze und anschließendes Walzstrecken des Metallbandes, nämlich abfalllos und mit hoher Fertigungsgeschwindigkeit.

Die Metallbänder werden vor oder nach dem Ummanteln mit dem Dichtmaterial zu einem meist U-förmigen Klemmprofil gebogen, welches auf die Dichtflansche der Öffnung geklemmt wird. Um dabei den Konturen der Öffnung folgen zu können, muss das Klemmprofil meist sowohl in horizontaler als auch in vertikaler Ebene flexibel sein. Zudem soll das Klemmprofil in longitudinaler Richtung stauchbar sein, da die abzudichtenden Öffnungen erhebliche Umfangstoleranzen aufweisen können und ein Ablängen des Dichtstreifens vor Ort äußerst aufwändig wäre. Dichtstreifen mit stauchbarem Klemmprofil können nämlich auf die maximal vorkommende Länge bevorzugt endlos gefertigt und beim Einbau auf die tatsächliche Länge gestaucht werden. Ein Zusammenkleben, -vulkanisieren oder dergleichen dieser Dichtstreifen muss daher nicht vor Ort geschehen, so dass der Dichtstreifeneinbau auch von Robotern durchgeführt werden kann.

Andererseits muss das Klemmprofil auch eine gewisse Zugfestigkeit aufweisen, da die Zier- oder Dichtleisten üblicherweise durch Extrudieren hergestellt werden, wobei erhebliche Kräfte in Längsrichtung des Bandes auftreten. Ein weiteres Erfordernis des Klemmprofils besteht darin, eine größtmögliche Klemmkraft auf die Dichtflansche auszuüben. Weiterer relevanter Stand der Technik ist in EP 1 464 526, FR 2 509 825, US 2 290 842, FR 2 650 648, EP 0 441 287 A1, FR 2 684 159 A1 und CA 2 296 203 A1 offenbart.

Der Erfindung liegt die Aufgabe zugrunde, ein Metallband der eingangs genannten Art zu verbessern. Insbesondere soll Material und damit Gewicht eingespart und die Herstellung verbilligt werden. Außerdem soll die Flexibilität des Bandes verbessert werden.

Diese Aufgabe wird durch ein Metallband mit den Merkmalen des Anspruchs 1 gelöst.

Durch die Anordnung von jeweils zwei Mittelschlitzen zwischen aufeinanderfolgenden Randschlitzen kann Material und damit Gewicht sowie Kosten eingespart werden. Beim Strecken des Metallbandes verhalten sich nämlich die jeweils zwei Mittelschlitze wie ein Schlitz mit Mittelsteg. Die Weite der beiden Mittelschlitze nach dem Strecken ist daher etwa nur halb so groß wie die Weite der Randschlitze. Das Band kann daher etwa doppelt so stark gestreckt werden, ohne dass im Bereich der Mittelschlitze zu große Lücken entstehen, die beim Beschichten mit Gummi oder Kunststoff zu einer unebenen Oberfläche führen würden, sogenannter Hungry-Horse-Effekt.

Die mögliche große Weite der Randschlitze hat außerdem den Vorteil, dass das Band dadurch eine erhöhte Flexibilität erhält und es daher für extrem enge Radien des Dichtprofils, wie beispielsweise bei Schiebedächern, wo viel Gummi oder Kunststoff zwischen den Zähnen vorhanden sein sollte, eingesetzt werden kann. Durch die jeweils zwei Mittelschlitze ist auch kein Haftvermittler erforderlich. Auch dies führt zu einer Senkung der Kosten und des Zeitaufwands bei der Herstellung. Außerdem weist das Band eine gute Stauchbarkeit auf, wodurch sich die eingangs erwähnten Vorteile ergeben.

Bevorzugt sind die Randschlitze paarweise angeordnet, indem jeweils zwei Randschlitze einander gegenüberliegend von den beiden Rändern des Metallbandes nach innen geführt sind. Hierdurch ergibt sich ein flexibles Band mit hoher Klemmkraft.

Des weiteren sind insbesondere zwischen allen aufeinanderfolgenden Randschlitzen, insbesondere zwischen allen Paaren, zwei in Längsrichtung des Metallbandes aufeinanderfolgende Mittelschlitze angeordnet. Dadurch ergibt sich ein kontinuierliches Band mit gleichförmiger Oberfläche.

Nach einer Ausgestaltung der Erfindung sind die Randschlitze und die Mittelschlitze einander in Querrichtung des Metallbandes überlappend ausgebildet. Hierdurch ergibt sich eine besonders hohe Flexibilität und Stauchbarkeit.

Ein besonders vorteilhaftes Metallband ergibt sich, wenn sich die Randschlitze und die Mittelschlitze nur geringfügig überlappen, insbesondere wenn die Randschlitze jeweils etwa über vier Zehntel der Bandbreite und die Mittelschlitze jeweils über etwa ein Drittel der Bandbreite verlaufen. Es sind jedoch auch andere Verhältnisse durchaus möglich.

Um besonders breite Metallbänder zu realisieren, ist es vorteilhaft, wenn zumindest teilweise zwei oder mehr Mittelschlitze nebeneinander angeordnet sind. Dadurch kann auch ein breiter Mittelbereich mit glatter Oberfläche sowie eine gute Verankerung ohne Haftvermittler erzielt werden.

Eine besonders gleichmäßige Oberfläche ergibt sich außerdem dann, wenn Form und Größe der hintereinander und/oder nebeneinander angeordneten Mittelschlitze identisch sind.

Die Randschlitze können auch jeweils nur etwa über ein Drittel der Bandbreite verlaufen, und es kann zwischen einander gegenüberliegenden Randschlitzen mindestens ein zusätzlicher Mittelschlitz angeordnet sein, dessen beide Enden jeweils in einer Spitze auslaufen. Diese Ausgestaltung ist insbesondere bei besonders breiten Metallbändern vorteilhaft, um eine ausreichende Zugfestigkeit mit einer hohen Flexibilität und Stauchbarkeit zu kombinieren sowie eine gute Verankerung auch im breiten Mittelbereich sicherzustellen.

Die Mittelschlitze können insbesondere eine Trapezform, die zusätzlichen Mittelschlitze die Form eines doppelten Trapezes aufweisen. Auch dies fördert die Stauchbarkeit und ist vorteilhaft im Hinblick auf eine glatte Oberfläche mit gleichzeitig guter Verankerung des Gummi- oder Kunststoffmaterials am Metallband.

Die Herstellung der Schlitze erfolgt durch Schneiden und anschließendes Walzstrecken. Damit können sehr hohe Fertigungsgeschwindigkeiten erreicht werden. Zudem ist die Herstellung abfalllos möglich, und die Öffnungsweite der Schlitze kann nach Bedarf variiert werden. Erfindungsgemäß sind die Randschlitze etwa doppelt so stark aufgeweitet wie die in Bandlängsrichtung dazwischen angeordneten Mittelschlitze. Schließlich können auch alle anderen Abmessungen wie Breite der Mittelschlitze, Stegbreite, Zahnbreite und Bandbreite selbst problemlos variiert werden.

Nicht beschränkende Ausführungsbeispiele der Erfindung sind in der Zeichnung dargestellt und werden nachfolgend beschrieben. Es zeigen, jeweils in schematischer Darstellung:
- Fig. 1: eine erste Variante eines erfindungsgemäßen Metallbandes in Draufsicht und
- Fig. 2: eine zweite Variante eines erfindungsgemäßen Metallbandes in Draufsicht.

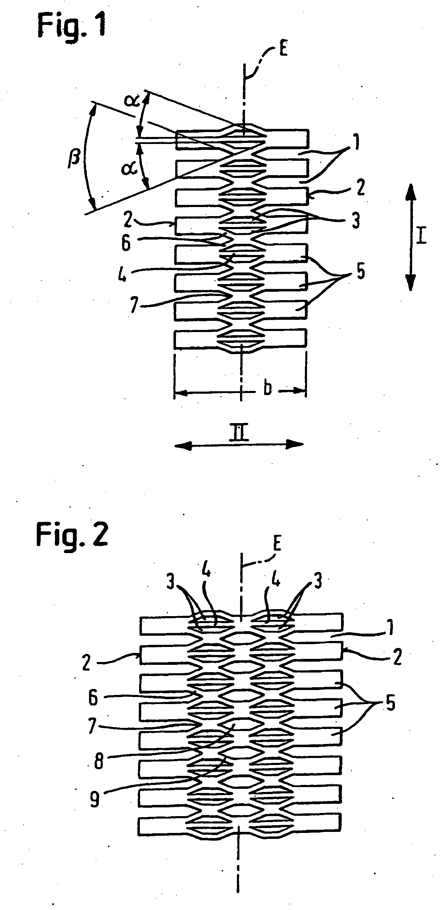

Das in Fig. 1 dargestellte Metallband, das als Einlage für Zier- oder Dichtstreifen aus flexiblem Material, insbesondere Gummi oder Kunststoff, verwendet werden kann, weist eine Vielzahl von periodisch in Längsrichtung I des Bandes aufeinanderfolgenden Randschlitzen 1 auf, die paarweise einander gegenüberliegend von den beiden Rändern 2 des Metallbandes nach innen geführt sind. Die Randschlitze 1 erstrecken sich dabei jeweils etwa über vier Zehntel der Breite b des Metallbandes. Zwischen jeweils zwei aufeinanderfolgenden Paaren von Randschlitzen 1 weist das Metallband des weiteren jeweils zwei in Längsrichtung I des Metallbandes aufeinanderfolgende Mittelschlitze 3 auf, die sich jeweils etwa über ein Drittel der Bandbreite b erstrecken. Dadurch überlappen die Mittelschlitze 3 in Querrichtung II des Metallbandes mit den Randschlitzen 1.

Die Randschlitze 1 sind durch Schneiden und Walzstrecken hergestellt und weisen eine bandinnenseitig in einer Keilspitze 7 zusammenlaufende Form auf. Die Mittelschlitze 3 sind ebenfalls durch Schneiden und Walzstrecken hergestellt und weisen jeweils eine Trapezform auf. Die beiden zwischen zwei aufeinanderfolgenden Paaren von Randschlitzen 1 angeordneten Mittelschlitze 3 sind dabei entgegengesetzt ausgerichtet. Zwischen ihnen befindet sich ein Mittelsteg 4, der die durch die Randschlitze 1 an beiden Rändern des Metallbandes gebildeten Zähne 5 miteinander verbindet. Wie man erkennt, sind in Bandlängsrichtung I aufeinanderfolgende Zähne 5 durch die Ausbildung der Randschlitze 1 und der Mittelschlitze 3 ebenfalls über schmale Stege 6 miteinander verbunden. Hierdurch ergibt sich eine hohe Flexibilität und Stauchbarkeit des Metallbandes bei trotzdem ausreichender Zugfestigkeit für die Extrusion.

In dem dargestellten Ausführungsbeispiel sind die Randschlitze 1 und die Mittelschlitze 3 symmetrisch zur Mittellängsebene E des Metallbandes angeordnet. Eine asymmetrische Anordnung wäre aber ebenfalls möglich. Dadurch kann eine unterschiedliche Flexibilität in entgegengesetzten Biegerichtungen erreicht werden.

Die Mittelschlitze 3 weisen einen Öffnungswinkel α der Trapezform auf, der etwa halb so groß ist wie der Öffnungswinkel β der Keilspitze 7 der Randschlitze 1. Die Aufweitung der Randschlitze 1 ist dadurch etwa doppelt so groß wie die Aufweitung der Mittelschlitze 3.

Das in Fig. 2 dargestellte Metallband ist breiter als das in Fig. 1 dargestellte. Insbesondere ist der Mittelbereich zwischen den Keilspitzen 7 der Randschlitze 1 vergrößert. Zum Ausgleich sind jeweils zwei Mittelschlitze 3 nebeneinander angeordnet. Das heißt, zwischen aufeinanderfolgenden Paaren von Randschlitzen 1 befinden sich in Bandlängsrichtung I hintereinander zwei Paare von nebeneinander angeordneten Mittelschlitzen 3. Zwischen den hintereinander angeordneten Mittelschlitzen 3 ist jeweils wieder ein Steg 4 vorhanden. Außerdem sind zwischen den Keilspitzen 7 der Randschlitze 1 jedes Paares zusätzliche Mittelschlitze 8 angeordnet, die die Form eines doppelten Trapezes aufweisen. Dadurch werden weitere schmale Stege 9 zwischen aufeinanderfolgenden Zähnen 5 des Bandes gebildet. Es ergibt sich ein breites Band mit hoher Flexibilität und Stauchbarkeit sowie gleichmäßiger glatter Oberfläche, die eine gute Verankerung ohne Haftvermittler ermöglicht.

Auch bei dieser Variante sind die Schlitze 1, 3 und 8 durch Schneiden und Walzstrecken hergestellt. Die Randschlitze 1 weisen wieder etwa die doppelte Weite auf wie die Mittelschlitze 3. Die zusätzlichen Mittelschlitze 8 haben etwa dieselbe Weite wie die Randschlitze 1. Schließlich ist die Anordnung der Schlitze 1, 3 und 8 auch hier symmetrisch zur Mittellängsebene E des Bandes, könnte aber auch asymmetrisch vorgesehen sein.

### Bezugszeichenliste

- 1: Randschlitz
- 2: Rand
- 3: Mittelschlitz
- 4: Mittelsteg
- 5: Zahn
- 6: Steg
- 7: Keilspitze
- 8: zusätzlicher Mittelschlitz
- 9: Steg

- I: Bandlängsrichtung
- II: Bandquerrichtung
- E: Mittellängsebene
- b: Bandbreite
- α: Winkel
- β: Winkel

## Patentansprüche

1. Metallband als Einlage für Zier- oder Dichtstreifen aus flexiblem Material, insbesondere Gummi oder Kunststoff, welches insbesondere zu einem Profil gebogen wird, mit einer Vielzahl von insbesondere periodisch in Längsrichtung (I) des Bandes aufeinanderfolgenden, von einem Rand (2) des Metallbandes quer zu seiner Längsrichtung (I) nach innen geführten, keilförmigen oder innen keilförmig auslaufenden Schlitzen (1) und in Längsrichtung (1) zwischen aufeinanderfolgenden Randschlitzen (1) angeordneten, ebenfalls quer zur Längsrichtung (I) des Metallbandes verlaufenden, aber nicht bis zum Rand (2) geführten Mittelschlitzen (3), die zu ihren beiden Enden hin in einer Spitze auslaufen,
**dadurch gekennzeichnet,**
**dass** zwischen zwei aufeinanderfolgenden Randschlitzen (1) zwei in Längsrichtung (I) des Metallbandes aufeinanderfolgende Mittelschlitze (3) angeordnet sind, wobei die Schlitze (1, 3, 8) geschnitten und durch Walzstrecken aufgeweitet sind, wobei die Randschlitze (1) etwa doppelt so stark aufgeweitet sind wie die in Bandlängsrichtung (I) zwischen den Randschlitzen (1) angeordneten Mittelschlitze (3).

2. Metallband nach Anspruch 1,
**dadurch gekennzeichnet,**
**dass** die Randschlitze (1) paarweise angeordnet sind, indem jeweils zwei Randschlitze (1) einander gegenüberliegend von den beiden Rändern (2) des Metallbandes nach innen geführt sind.

3. Metallband nach Anspruch 1 oder 2,
**dadurch gekennzeichnet,**
**dass** zwischen allen aufeinanderfolgenden Randschlitzen (1), insbesondere zwischen allen Paaren, zwei in Längsrichtung (I) des Metallbandes aufeinanderfolgende Mittelschlitze (3) angeordnet sind.

4. Metallband nach einem der vorhergehenden Ansprüche,
**dadurch gekennzeichnet,**
**dass** die Randschlitze (1) und die Mittelschlitze (3) einander in Querrichtung (II) des Metallbandes überlappend ausgebildet sind, wobei die Randschlitze (1) und die Mittelschlitze (3) bevorzugt einander nur geringfügig überlappen.

5. Metallband nach einem der vorhergehenden Ansprüche,
**dadurch gekennzeichnet,**
**dass** die Randschlitze (1) jeweils etwa über vier Zehntel der Bandbreite (b) verlaufen und/oder dass die Mittelschlitze (3) jeweils über etwa ein Drittel der Bandbreite (b) verlaufen.

6. Metallband nach einem der vorhergehenden Ansprüche,
**dadurch gekennzeichnet,**
**dass** zumindest teilweise zwei oder mehr Mittelschlitze (3) nebeneinander angeordnet sind und/oder dass Form und Größe der in Längsrichtung hintereinander und/oder nebeneinander angeordneten Mittelschlitze (3) identisch sind.

7. Metallband nach einem der vorhergehenden Ansprüche,
**dadurch gekennzeichnet,**
**dass** die Randschlitze (1) jeweils nur etwa über ein Drittel der Bandbreite (b) verlaufen und dass zwischen einander gegenüberliegenden Randschlitzen (1) mindestens ein zusätzlicher Mittelschlitz (8) angeordnet ist, dessen beide Enden jeweils in einer Spitze auslaufen.

8. Metallband nach einem der vorhergehenden Ansprüche,
**dadurch gekennzeichnet,**
**dass** die Mittelschlitze (3) Trapezform aufweisen und/oder dass die zusätzlichen Mittelschlitze (8) die Form eines doppelten Trapezes aufweisen.

9. Metallband nach einem der vorhergehenden Ansprüche,
**dadurch gekennzeichnet,**
**dass** die Schlitze (1, 3, 8) symmetrisch oder asymmetrisch zur Mittellängsebene (E) des Metallbandes angeordnet sind.

## Claims

1. A metal band as an inlay for trim strips or sealing strips made from flexible material, in particular rubber or plastic, which is in particular bent to form a section, having a plurality of wedge-shaped slots (1), or slots which run out inwardly in wedge shape, which in particular follow one another periodically in the longitudinal direction (I) of the band and which are inwardly directed transversely to the longitudinal direction of the metal band from a margin (2) of the metal band, and having central slots (3) which are arranged between marginal slots (1) following one another in the longitudinal direction (I), which likewise extend transversely to the longitudinal direction (I) of the metal band, but are not led up to the margin (2), and which run out in a tip towards both ends, **characterized in that**
two central slots (3), which follow one another in the longitudinal direction (I) of the metal band, are arranged between two marginal slots (1) following one another, with the slots (1, 3, 8) being cut and being widened by roller paths, with the marginal slots (1) being widened approximately twice as much as the central slots (3) arranged between the marginal slots (1) in the longitudinal direction (I) of the band.

2. A metal band in accordance with claim 1,
**characterized in that**
the marginal slots (1) are arranged in pairs **in that** two respective marginal slots (1) disposed opposite one another are inwardly directed from the two margins (2) of the metal band.

3. A metal band in accordance with claim 1 or claim 2,
**characterized in that**
two central slots (3) following one another in the longitudinal direction (I) of the metal band are arranged between all marginal slots (1) following one another, in particular between all pairs.

4. A metal band in accordance with any one of the preceding claims,
**characterized in that**
the marginal slots (1) and the central slots (3) are designed overlapping one another in the transverse direction (II) of the metal band, with the marginal slots (1) and the central slots (3) preferably only overlapping one another slightly.

5. A metal band in accordance with any one of the preceding claims,
**characterized in that**
the marginal slots (1) each extend approximately over four tenths of the band width (b); and/or **in that** the central slots (3) each extend approximately over one third of the band width (b).

6. A metal band in accordance with any one of the preceding claims,
**characterized in that**
two or more central slots (3) are arranged next to one another at least in part; and/or **in that** the shape and size of the central slots (3) arranged behind one another and/or next to one another in the longitudinal direction are identical.

7. A metal band in accordance with any one of the preceding claims,
**characterized in that**
the marginal slots (1) each extend only approximately over a third of the band width (b); and **in that** at least one additional central slot (8), whose two ends each taper into a tip, is arranged between mutually oppositely disposed marginal slots (1).

8. A metal band in accordance with any one of the preceding claims,
**characterized in that**
the central slots (3) have a trapezoidal shape; and/or **in that** the additional central slots (8) have the form of a double trapezoid.

9. A metal band in accordance with any one of the preceding claims,
**characterized in that**
the slots (1, 3, 8) are arranged symmetrically or asymmetrically to the central longitudinal plane (E) of the metal band.

## Revendications

1. Bande métallique à titre d'insert pour des rubans décoratifs ou des rubans d'étanchéité en matériau flexible, en particulier en caoutchouc ou en matière plastique, qui est cintrée en particulier pour former un profilé, comprenant une pluralité de fentes (1) qui se suivent les unes les autres, en particulier de manière périodique, en direction longitudinale (I) de la bande, en forme de coin ou se terminant à l'intérieur en forme de coin et menées depuis une bordure (2) de la bande métallique vers l'intérieur transversalement à la direction longitudinale (I) de la bande, et des fentes médianes (3) agencées en direction longitudinale (I) entre des fentes de bordure (1) successives, s'étendant également transversalement à la direction longitudinale (I) de la bande métallique mais sans aller jusqu'au bordures (2), qui se terminent en une pointe vers leurs deux extrémités,
**caractérisée en ce que**
deux fentes médianes (3) successives en direction longitudinale (I) de la bande métallique sont agencées entre deux fentes de bordure (1) successives, dans laquelle les fentes (1, 3, 8) sont découpées et élargies par déploiement-laminage, et les fentes de bordure (1) sont élargies environ deux fois plus que les fentes médianes (3) agencées entre les fentes de bordure (1) en direction longitudinale (I) de la bande.

2. Bande métallique selon la revendication 1,
**caractérisée en ce que** les fentes de bordure (1) sont agencées par paires, **en ce que** deux fentes de bordure respectives (1) opposées l'une à l'autre sont menées vers l'intérieur depuis les deux bordures (2) de la bande métallique.

3. Bande métallique selon la revendication 1 ou 2,
**caractérisée en ce que** deux fentes médianes (3) successives en direction longitudinale (I) de la bande métallique sont agencées entre toutes les fentes de bordure (1) successives, en particulier entre toutes les paires.

4. Bande métallique selon l'une des revendications précédentes,
**caractérisée en ce que** les fentes de bordure (1) et les fentes médianes (3) sont réalisées de manière à se chevaucher les unes les autres en direction transversale (II) de la bande métallique, et les fentes de bordure (1) et les fentes médianes (3) ne se chevauchent de préférence les unes les autres que légèrement.

5. Bande métallique selon l'une des revendications précédentes,
**caractérisée en ce que** les fentes de bordure (1) s'étendent chacune environ sur quatre dixièmes de la largeur (b) de la bande et/ou **en ce que** les fentes médianes (3) s'étendent chacune sur environ un tiers de la largeur (b) de la bande.

6. Bande métallique selon l'une des revendications précédentes,
**caractérisée en ce que** deux ou plusieurs fentes médianes (3) sont agencées au moins partiellement les unes à côté des autres et/ou **en ce que** la forme et la taille des fentes médianes agencées les unes derrière les autres et/ou les unes à côté des autres en direction longitudinale sont identiques.

7. Bande métallique selon l'une des revendications précédentes,
**caractérisée en ce que** les fentes de bordure (1) s'étendent chacune uniquement sur environ un tiers de la largeur (b) de la bande, et **en ce qu'**au moins une fente médiane (8) additionnelle est agencée entre des fentes de bordure (1) mutuellement opposées, fentes médianes dont les deux extrémités se terminent chacune en une pointe.

8. Bande métallique selon l'une des revendications précédentes,
**caractérisée en ce que** les fentes médianes (3) présentent une forme de trapèze et/ou **en ce que** les fentes médianes (8) additionnelles présentent la forme d'un double trapèze.

9. Bande métallique selon l'une des revendications précédentes,
**caractérisée en ce que** les fentes (1, 3, 8) sont agencées de manière symétrique ou asymétrique par rapport au plan longitudinal médian (E) de la bande métallique.
